# EUROPEAN PATENT SPECIFICATION

(11) **EP 2 546 537 B1**
(45) Date of publication and mention of the grant of the patent: **12.10.2016**
(21) Application number: 12176422.9
(22) Date of filing: 13.07.2012
(51) Int. Cl.: F16D 3/40

(54) **Cardan joint crushing device that can achieve crushing with rounded lines**
Zerkleinerungsvorrichtung für Kardanverbindung, das eine Zerkleinerung mit abgerundeten Linien erreichen kann
Dispositif de broyage de joint de cardan pouvant obtenir des lignes étant arrondies de broyage

(30) Priority: 13.07.2011 TR 201106952
(43) Date of publication of application: 16.01.2013
(73) Proprietor: Tirsan Kardan Sanayi Ve Ticaret Anonim Sirketi, 45030 Manisa (TR)
(72) Inventor: Koruk, Adnan, 45030 Manisa (TR); Deveci, Omer, 45030 Manisa (TR); Umdu, Arif, 45030 Manisa (TR); Tasan, Korkut, 45030 Manisa (TR); Dizlek, M. Eren, 45030 Manisa (TR); Guneri, Ercan, 45030 Manisa (TR)
(74) Representative: Dereligil, Ersin

(56) References cited:
- JP-A- H05 118 343
- JP-A- H05 296 256
- JP-A- S55 129 623
- US-A- 4 704 782

## Description

### The Related Art

The invention relates to assembly of cardan joints located on cardan shafts that transmit the rotation motion and torque on motorised vehicles.

The invention relates in particular to a crushing device developed for assembly process of cardan joints that provides linking and fixing of the ujoint cross piece located in the centre, in form of a plus, comprising special type of universal joint bearings on its arms and of the yoke halfs connected with the universal joint bearings on reciprocal arms of this piece, and a device according to this method.

### The Prior Art

Cardan joints are special designs useful for achievement of angular motion between shafts that transmit torque and rotation motion. While cardan joints are used mainly in sectors such as automotive, machinery production, they have had a highly dense rate of usage in a great number of other fields for a long time as well. Due to their having a broad range of usage and history of their essential design dating back to very ancient times, many studies have been carried out on cardan joints, different assembly and production methods have been devised.

A great part of these designs are comprised of assembly methods wherein 2 yoke halfs constituting a cardan joint and special cross part universal jointknown as ujoint cross in form of a 'plus', comprising 4 arms located among such pieces by universal joint bearings and providing reciprocal motion of arms thereof are linked with both yoke halfs.

Today, a variety of methods have been developed for assembly of cardan joints. Basic objective of these methods is, after passing ujoint cross's reciprocal arms through holes on yoke halfs, to achieve fixing of the ujoint by inserting roller bearings between reciprocal yoke holes and ujoint cross arms. Different methods developed for this purpose involve different mechanisms/methods to comprise support forces that will meet escape forces acting on universal joint bearings.

After the process of inserting universal joint bearings located on ujoint cross piece into the holes on yoke half with appropriate splice tolerances, maintaining the positions of universal joint bearings inside the holes with a certain tightness value is desired. This position value affects running performance and service life of cardan shaft. As there is an application like grooving special channels inside the yoke half holes and supporting the roller bearings by using snap rings, there are also applications that prevent universal joint bearings from their outer dislocation by installing a cover onto holes' surfaces looking outside by means of different methods.

Most significant disadvantage in such applications is the need of precise machining tolerance for an ideal assembly. The channels inside the hole where snap rings that would prevent dislocation of universal joint bearings are to be inserted, the arms of the ujoint cross piece and the universal joint bearings thereof are required to be produced with precise dimensions and assembled with ideal gap and position tolerance during assembly. While insignificant deviations in said precision diamensions may lead to assembly of ujoint cross, loose or they can also make assembly harder as well. At the same time, while even under the most ideal condition the snap rings inserted in the exitway direction the universal joint bearings can resist only out dislocation forces, they can not preload universal joint bearings to prevent creation of gap in normal state and to form joint tightness. Parts not machined precisely may cause misalignment centres of the ujoint cross and yoke halfs leading to improper running of universal joints.

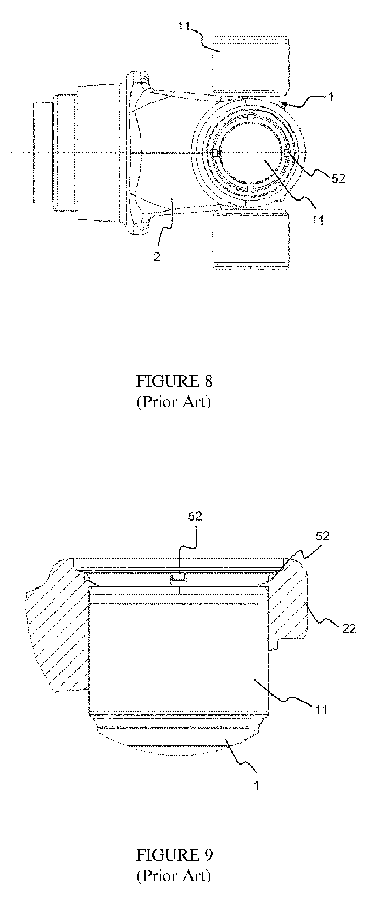

In addition to the method of fixing universal joint bearings with the methods involving usage of a snap ring or a cover, there are also a variety of different patented methods based on the principle of stacking materials that will prevent dislocation of the universal joint bearings inside the hole wherein universal joint bearings are inserted. The figures relating to this method having the prior art are given in Figure 8 and 9. As shown on Figure 8 and 9, it is an assembly method based on strip of material onto said exitway in a way that will block exitway of the universal joint bearings and stacking of the material thereof onto exitway. In the literature, some of the patents relating to the topic are American patents numbered US4162568**,** US3217399**,** US3230617 **and** US4704782**.** Method revealed via this and similar patents developed, relies on the principle of forming stripping forms (52) on the yoke holes and its upper circumference surface by using a stake device (5) which has various shaped stake tabs (51) with bigger outside diameter than the yoke hole. The staking forms (52) formed thereof will prevent dislocation of the universal joint bearings in the reverse direction of assembly.

As the devices performing this process are sharp tools each, they become dull over time and lose staking feature of theirs. In this case, it is necessary that these devices are changed or are reused by sharpening. This kind of interventions on devices and tools increase cost of the operation significantly. Furthermore, tools becoming dull in serial production conditions can lead to variety in the assembly operation. In case of imporper sharpening of the tools, assembly operation can not be carried out in appropriate proficiency. Kits' becoming dull over time requires frequent control of operation.

Before the material is stripped and stacked on the universal joint bearing, the ujoint cross can be centred accurately between the arms of yoke half with the help of a guide bars sliding into this device. The centred ujoint cross can be assembled in ideal tightness in a way without a gap by device which strips and draws the material. However, although the burrs formed by the method can set a harsh resistance against the dislocation force, they lose the resistance shown in the direction of dislocation of the universal joint bearings, and break off when a certain stress value is exceeded. In addition, under running conditions of the joint, the burrs that fixing the universal joint bearings may also break of and lead to elimination of support forces on the universal joint bearings.

In the literature, also, Japanese applications numbered JPH05296256 and numbered JPS55129623 are present. Purpose of application numbered JPH05296256 is to cause shearing forces to be applied only to calking claws by setting a journal via the bearing race of each of the bearing holes of a yoke made of aluminium alloy, and fitting a collar into the top portion of the bearing race, and calking a collar to the inner peripheral portion of each bearing hole using calking tools while regulating the radial dimensions of the calking claws. On the other hand, purpose of application numbered JPH05296256 is to ensure a calking pawl of predetermined capacity so as to contrive stabilization of product accuracy and quality of a universal joint.

In conclusion; new developments are being applied on the on the assembly methods that provide connection of universal joint bearings and yoke half to one another, therefore new methods that will eliminate the disadvantages described above and make easier the current process are required.

### Purpose of the Invention

Present invention relates to a crushing device the requirements disclosed above, eliminating all the disadvantages, bringing some additional advantages and, developed assembly technique and regarding decive for linking of the ujoint cross piece in form of a plus located in centre of cardan joint to the yoke halfs by using universal joint bearings.

While the device revealed by the invention works similar to the device described within the prior art, wherein material from yoke hole sides and around is stripped and stacked in front of the universal joint bearings however it is based on deformation by crushing of the material via round line members instead of its being stacking by being stripped with sharp tab on the set.

A further purpose of the invention is, while maintaining the advantages in the prior art by means of the assembly method revealed by the art, elimination of problems of material stripping and tools' becoming dull.

By removing the cutting tab forms on the assembly kit, balls made from steel and similar hard and resistant materials that can also be found as commercially available from different materials on the market have been placed in these regions. Based on this, another purpose of the invention is successful installation of these balls as fixed or make them easily replaceable in possible deformation cases, by installation of a cover to the front thereof which can be fixed by means of a variety of connectors.

A further purpose of the invention is provision of deformation across circumference of the hole via rollers that can be inserted instead of said balls.

Balls or rollers can be inserted in desired number to be at least two units symmetrically around the device which is the subject of the invention. While the process of crushing can be carried out via a device having as many balls as desired deformation marks over hole circumference, creation of new deformation marks can also be achieved via spinning of the device at desired angle on the axis of application after it performs crushing one time. Since increase of the number of deformation marks formed by means of the crushing device at one time will increase the total force required for sufficient deformation, forming crush deformation by spinning the device with less number of balls can yield more effective results. In addition, with a plurality of slots that will be manufactured around to the device, device can also be used by installing only as many balls or rollers as the number of crushing form desired during the operation by leaving the other slots empty. In this way, crushing process can be applied with the same device according to desired number of crushing forms by installing at least 2 crushing balls or rollers.

Another purpose of the invention is to achieve, with the device which is the subject of the invention, crushing of material on the axis of the hole by application of a force around the hole via surfaces that are not sharp, without stripping material from surface pressed, contrary to the prior art. The crushed material advances, by jamming, by making expansion towards the gap inside the hole. Through application of this crushing process in sufficient power and distance, it compacts the universal joint bearing in its existing position by deforming towards the circumference of the yoke holes. Thanks to deformation of the material stacked in front of the universan joint bearing by being crushed instead of being stripped, holding strength increase is provided.

A further purpose of the invention is that as a result of the escape force applied over the universal joint bearing, in addition to a risk's not occurring such as slack of universal joint bearing by breaking off of the material stacked after a certain value, a certain portion of compaction force continues until the universal joint bearing completely comes out, since the universal joint bearing can not break the constructed deformation surface even if it climbs over the surface of it.

In line with the objectives mentioned above, by the invention
- crushing of said material is provided without performing the process of material cutting/stripping from the circumference of the universal joint bearing's hole.
- risk of tools' becoming dull is eliminated since there is no cutting process.
- deformation that will occur on the balls or rollers which are in contacts with the material throughout the operation can be eliminated via easily replacement of these parts.
- since there is nor need for tool renewal or sharpening, emergence of an extra cost is eliminated.
- instead of sharp tabs, pressure is applied around the hole via members having rounded lines.
- placing of crushing balls or rollers onto the device modularly, replacement of them when required as necessary can be achieved.
- crushing can be performed by symmetrical insertion of desired number of crushing balls or rollers into the slots over the device.

To meet the objectives mentioned above, the invention is a crushing device used for assembly of cardan joints located on cardan shafts transmitting the rotation motion and torque on motorised vehicles, ensuring connection of a universal joint bearing located on reciprocal arms of an ujoint cross located in between the two mounting holes of a yoke half to said yoke half, said crushing device being formed on a body (41),said crushing device (4) comprising: - at least two crushing members placed onto said body and providing compaction by crushing of the material around the hole into which the universal joint bearing seats in said yoke half, thus fixing the universal joint bearing, characterised in that; said crushing device further comprises: - at least two slots that provide positioning of said crushing members to the body upon insertion of at least one of said crushing members.

To meet the objectives mentioned above, said crushing members are hard members in circular form such as balls, tubes, etc with resistant structure, not having the property of stripping. Said crushing members are positioned in a way to be in parallel with one another on said body.

To fulfil the objectives disclosed above, it comprises at least one retaining cover used for fixing said crushing members to the body, and facilitating replacement of said crushing members in case of a probable deformation.

A method relating assembly of a crushing device used for assembly of cardan joints located on cardan shafts transmitting the rotation motion and torque on motorised vehicles, ensuring connection of universal joint bearing located on arms of the ujoint cross located in the centre, of these universal joint bearing on reciprocal arms of said ujoint cross to this yoke half via mounting hole found in yoke half, and is formed on a body and performing respectively the operations of
- insertion of reciprocal arms of the ujoint cross into yoke holes,
- insertion of universal joint bearing into yoke holes via exterior side of said mounting holes,
- pushing the universal joint bearing to the joke hole by means of centring guide bar and centring of the ujoint cross,
that provides;
- applying force to upper surface of yoke hole by means of the crushing members positioned on crushing device,
- crushing the materials in said exterior surface and pushing crushed material
thereof into the mounting hole,
- blocking the exitway of universal joint bearings and fixing of said universal joint bearings in its present position, is not part of the invention.

The structural and characteristic properties and all of its advantages of the invention will be understood more clearly from the drawings provided below and from the detailed description written by making references to these drawings and therefore the assessment should be made by taking these drawings and the detailed description into account.

### Brief Description of the Figures

To understand the embodiment and the advantages of the present invention with the additional elements in the best way, it should be evaluated together with the figures whose descriptions are made below.
Figure 1 is a top, two dimensional view of the yoke half and the ujoint cross, connected by means of the invention, in a state assembled with each other after crushing process is completed.
Figure 2 is a cross-sectional view of the universal joint bearing and the yoke hole, connected by means of the invention, after crushing process is completed.
Figure 3 is a view illustrating assembly of the stripping device being used in the prior art and of the ball or roller crushing assembly device, which is the subject of the invention, onto the same cardan joint. Thus, the prior art and novel art assembly can be clearly seen together.
Figure 4 is a side, two dimensional view relating to assembly of the ball/roller crushing assembly device which is the subject of the invention to the ujoint cross.
Figure 5 is a perspective view relating to assembly of the ball/roller crushing assembly device which is the subject of the invention to the ujoint cross.
Figure 6 is a perspective view of the body of the ball/roller crushing assembly device which is the subject of the invention.
Figure 7 is a perspective view of the stripping device being used in the prior art.
Figure 8 is a top, two dimensional view of the stripping device and of the yoke half and the ujoint cross that are used in the prior art, in assembled state with one another after completion of staking process.
Figure 9 is a cross-sectional view of the ujoint cross universal joint bearing and of yoke hole, connected with the stripping device being used in the prior art, in a state after staking process is completed.

The figures do not need to be absolutely put to scales and details not essential to understand the present invention may have been omitted. Furthermore, the elements that are at least identical, or at least substantially have identical functions are illustrated with the same number.

### Reference Numbers

- **1.**: Ujoint cross
- **11.**: Universal joint bearing
- **12.**: Ujoint cross arms
- **2.**: Yoke half
- **21.**: Mounting hole
- **210.**: Mounting hole upper surface
- **22.**: Arm
- **3.**: Centring guide bar
- **4.**: Crushing device
- **41**.: Body
- **42.**: Circular crushing member
- **43.**: Ball/Roller slot
- **44.**: Retaining cover
- **45.**: Guide bar hollow
- **46.**: Crushing form
- **5.**: Stripping device
- **51.**: Stripping tabs
- **52.**: Stripping form
**M** direction: Universal joint bearing insert direction

### Detailed Description of the Invention

In this detailed description, preferred embodiments of the crushing device (4), which is the subject of the invention, are described only for a better understanding of the subject - matter and not constituting any limiting effect.

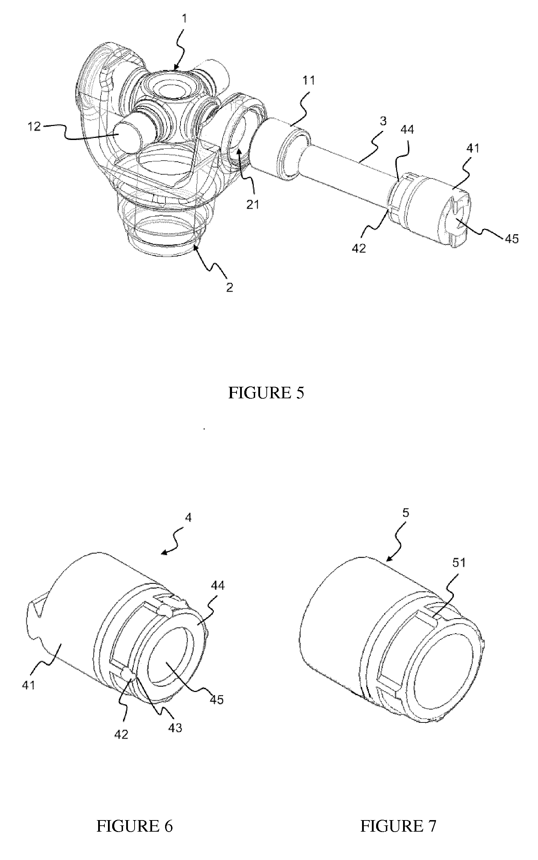

In Figure 5 and 6, a perspective view of crushing device (4) comprising crushing member (42) is given. The crushing member (42) relating to the assembly method which is the subject of the invention comprises a body (41), circular crushing members (42) located on the slots (43) created on said body, a retaining cover (44) that provides fixing of these crushing members (42) onto said body (41). By means of this cover (44), easy replacement of circular crushing members (42) is provided in probable deformation cases. There is a centring guide bar (3) working in the hollow (45) placed in the interior part of said device (4).

Said circular crushing members (42) are at least two in number, in a way to be axially symmetrical to one another and on the same plane. Therefore, the number of the slots (43) formed on the body (41) of the device (4) is at least two as well. Number of the slots (43) formed on the device' body (41) can be increased and crushing members (42) can be placed on some of the slots (43) thereof. Crushing operation can be performed by placing only certain crushing members (42) as well. Said circular crushing members (42) have been selected preferably as balls for this application of the invention, they can be any material having a roller or any other circular form strong enough in structure to be capable of carrying out crushing process. While dimensions/sizes of said crushing members (42) can vary according to desired crushing form, crushing members (42) of different sizes can be used on the same body (41).

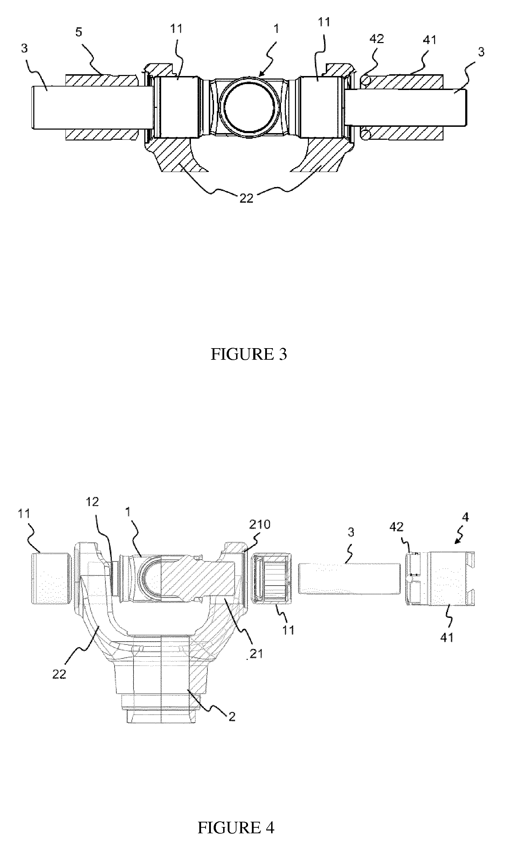

The crushing device (4) which is the subject of the invention, as seen in Figure 4 and Figure 5, is used for assembling ujoint cross (1) piece to a yoke half (2). Said ujoint cross (1) has 4 arms (12), these arms (12) insert into the gap inside the mounting hole (21) found in yoke half (2) and into which universal joint bearing (11) is inserted. Diameter of the circle which will tangent to the exterior all the crushing members (42) on crushing device (4) must be greater than the diameter of the universal jont bearing mounting hole (21) which will be crushed with said device (4). In this way, fixing of the universal joint bearing (11) can be achieved by means of the crushing forms (46) formed by crushing of the material in amount of the difference between from the mounting hole wall (210) and crushing members (42) extensions toward the upper surface of the universal joint bearing (11). To be able to form greater crushing forms (46), the difference between diameter of the tangent slightly touching exterior of crushing elements (42) and the diameter of the universal joint bearing mounting hole (21) which will be crushed with these members, or diameters of crushing members (42) can be increased, and crushing members (42) crush more material from the mounting hole wall (210) can also be achieved.

In Figure 3, a cross-sectional view relating to assembly operation , on reciprocal arms (22) of the same yoke half done by using the assembly device (5) being used in the prior art and the assembly device (4) which is the subject of the invention is given. While the assembly method in left half of Figure 3 is applied via the stripping device (5) in the prior art, it comprises invention assembly method and device (4) are contained in its right half.

### Working of the crushing device (4) is as follows:

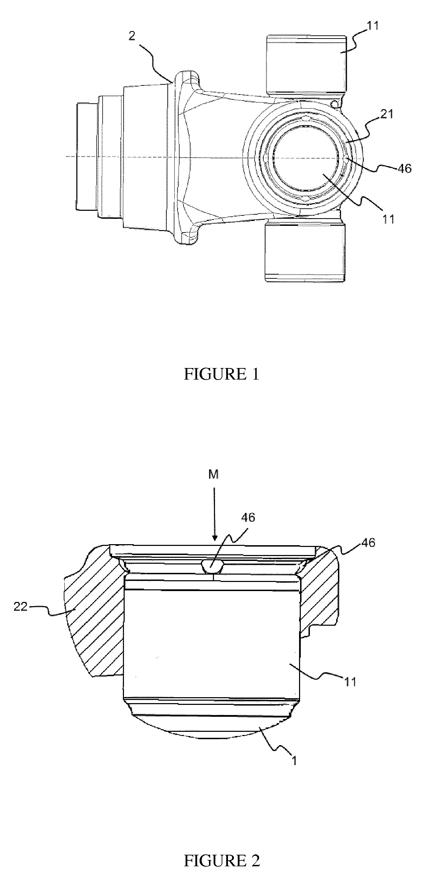

Reciprocal arms (12) of the ujoint cross (1) are inserted into universal joint bearing mounting holes (21) located on the arms (22) of yoke half (2). Subsequently, universal joint bearings (11) are seated in to the mounting holes (21) in a way contacting interior surface of said universal joint bearing assembly hole (21). Said universal joint bearings (11) are pushed into mounting hole (21) in the direction of M indicated in Figure 2 by means of centring guide bar (3). Thus, said ujoint cross (1) is centred between the arms (22) of yoke half (2).

After centring the ujoint cross (1) between arms (22) of yoke half via universal joint bearings (11) inserted onto reciprocal arms (12), crushing device (4) having circular crushing members (42) working on guide shaft (3) applies pressure to mounting hole upper surface (210) found in yoke half (2). As a result of this pressure-pressing force, crushing occurs in the material on diameter of exterior surface (210) and this material is pushed towards the mounting hole (21). Thus, hole (21) area on universal joint bearing (11) is expanded by crushing. Notches and crushing forms (46) formed with this method block exitway of universal joint bearings (11) and does pre-loading onto universal joint bearings (11) in order to provide the ujoint cross (1) to rotate without gap. Crushed material advances, upon jamming, expanding towards the gap inside the hole (21). As this crushing process is applied with sufficient force and distance, it provides compaction of the universal joint bearing (11) in its present position via deformation of the material around the hole (21) towards circumference of the universal joint bearings (11).

## Claims

1. A crushing device (4) used for assembly of cardan joints located on cardan shafts transmitting the rotation motion and torque on motorised vehicles, ensuring connection of a universal joint bearing (11) located on reciprocal arms (12) of an ujoint cross (1) located in between the two mounting holes (21) of a yoke half (2) to said yoke half (2), said crushing device (4) being formed on a body (41),
said crushing device (4) comprising:
- at least two crushing members (42) placed onto said body (41) and providing compaction by crushing of the material around the hole (21) into which the universal joint bearing (11) seats in said yoke half (2), thus fixing the universal joint bearing (11).
**characterised in that**; said crushing device (4) further comprises:
- at least two slots (43) that provide positioning of said crushing members (42) to the body (41) upon insertion of at least one of said crushing members (42).

2. Crushing device (4) according to Claim 1, and it is **characterised in that**; crushing members (42) are inserted into at least one of and/or a few of the slots (43) with different intervals.

3. Crushing device (4) according to Claim 1, and it is **characterised in that**; said crushing member (42) is in circular form.

4. Crushing device (4) according to Claim 1 and 3, and it is **characterised in that**; said crushing member (42) is a ball.

5. Crushing device (4) according to Claim 1 and 3, and it is **characterised in that**; said crushing member (42) is a roller.

6. Crushing device (4) according to Claim 1, and it is **characterised in that**; it comprises at least one retaining cover (44) used for fixing said crushing members (42) to the body (41), and facilitating replacement of said crushing members (42) in case of a probable deformation.

7. Crushing device (4) according to Claim 1, and it is **characterised in that**; said crushing members (42) are positioned in a way to be symmetrical to one another.

8. Crushing device (4) according to Claim 1,2 and 5, and it is **characterised in that**; it comprises slots (43) that provide insertion of said crushing member (42) to the body (41) and a circular crushing form (46) formed via crushing members (42) inserted into said slots (43).

## Patentansprüche

1. Zerkleinerungsvorrichtung (4), die zur Fertigung von Kardangelenken verwendet wird, die auf Kardanwellen, die Drehbewegung und Drehmoment auf motorisierte Fahrzeuge übertragen, angeordnet sind und eine Verbindung eines Kreuzgelenklagers (11), das auf wechselwirkenden Armen (12) eines Kreuzgelenks (1) angeordnet ist, das zwischen den zwei Befestigungslöchern (21) einer Gabelhälfte (2) angeordnet ist, mit der Gabelhälfte (2) gewährleisten, wobei die Zerkleinerungsvorrichtung (4) auf einem Körper (41) ausgebildet ist,
wobei die Zerkleinerungsvorrichtung (4) Folgendes umfasst:
- mindestens zwei Zerkleinerungselemente (42), die auf dem Körper (41) platziert sind und durch Zerkleinern des Materials um das Loch (21) herum, in das das Kreuzgelenklager (11) in der Gabelhälfte (2) eingepasst ist, Verdichtung bereitstellen, wodurch das Kreuzgelenklager (11) fixiert wird,
**dadurch gekennzeichnet, dass** die Zerkleinerungsvorrichtung (4) ferner Folgendes umfasst:
- mindestens zwei Vertiefungen (43), die bei Einsetzen von mindestens einem der Zerkleinerungselemente (42) ein Positionieren der Zerkleinerungselemente (42) an dem Körper (41) ermöglichen.

2. Zerkleinerungsvorrichtung (4) nach Anspruch 1, die **dadurch gekennzeichnet ist, dass** Zerkleinerungselemente (42) in unterschiedlichen Abständen in mindestens eine von und/oder mehrere der Vertiefungen (43) eingesetzt sind.

3. Zerkleinerungsvorrichtung (4) nach Anspruch 1, die **dadurch gekennzeichnet ist, dass** das Zerkleinerungselement (42) eine kreisförmige Form aufweist.

4. Zerkleinerungsvorrichtung (4) nach Anspruch 1 und 3, die **dadurch gekennzeichnet ist, dass** das Zerkleinerungselement (42) eine Kugel ist.

5. Zerkleinerungsvorrichtung (4) nach Anspruch 1 und 3, die **dadurch gekennzeichnet ist, dass** das Zerkleinerungselement (42) eine Walze ist.

6. Zerkleinerungsvorrichtung (4) nach Anspruch 1, die **dadurch gekennzeichnet ist, dass** sie mindestens eine Haltehülle (44) umfasst, die zum Fixieren der Zerkleinerungselemente (42) an dem Körper (41) verwendet wird und einen Austausch der Zerkleinerungselemente (42) im Fall einer wahrscheinlichen Deformierung ermöglicht.

7. Zerkleinerungsvorrichtung (4) nach Anspruch 1, die **dadurch gekennzeichnet ist, dass** die Zerkleinerungselemente (42) derart positioniert sind, dass sie symmetrisch zueinander sind.

8. Zerkleinerungsvorrichtung (4) nach Anspruch 1, 2 und 5, die **dadurch gekennzeichnet ist, dass** sie Vertiefungen (43), die ein Einsetzen des Zerkleinerungselements (42) in den Körper (41) ermöglichen, und eine runde Zerkleinerungsform (46), die durch Zerkleinerungselemente (42) gebildet ist und in die Vertiefungen (43) eingesetzt ist, umfasst.

## Revendications

1. Dispositif de broyage (4) utilisé pour l'assemblage de joints de cardan situés sur des arbres de cardan transmettant le mouvement et le couple de rotation à des véhicules motorisés, assurant la connexion d'une articulation universelle à rotule (11) située sur des bras réciproques (12) d'un joint de cardan (1) situé entre les deux trous de montage (21) d'une moitié de fourche (2) à ladite moitié de fourche (2), ledit dispositif de broyage (4) étant formé sur un corps (41), ledit dispositif de broyage (4) comprenant :
- au moins deux éléments de broyage (42) placés sur ledit corps (41) et fournissant la compaction en broyant le matériau autour du trou (21) à l'intérieur duquel l'articulation universelle à rotule (11) siège dans ladite moitié de fourche (2), fixant ainsi l'articulation universelle à rotule (11),
**caractérisé en ce que** ; ledit dispositif de broyage (4) comprend en outre :
- au moins deux logements (43) qui fournissent le positionnement desdits éléments de broyage (42) au corps (41) après insertion d'au moins un desdits éléments de broyage (42).

2. Dispositif de broyage (4) selon la revendication 1, et il est **caractérisé en ce que** ; des éléments de broyage (42) sont insérés à l'intérieur d'au moins un de et/ou quelques logements (43) à des intervalles différents.

3. Dispositif de broyage (4) selon la revendication 1, et il est **caractérisé en ce que** ; ledit élément de broyage (42) est de forme circulaire.

4. Dispositif de broyage (4) selon la revendication 1 et la revendication 3, et il est **caractérisé en ce que** ; ledit élément de broyage (42) est une balle.

5. Dispositif de broyage (4) selon la revendication 1 et la revendication 3, et il est **caractérisé en ce que** ; ledit élément de broyage (42) est un rouleau.

6. Dispositif de broyage (4) selon la revendication 1, et il est **caractérisé en ce qu'**il comprend au moins une couverture de conservation (44) utilisée pour fixer lesdits éléments de broyage (42) au corps (41), et pour faciliter le remplacement desdits éléments de broyage (42) en cas de déformation probable.

7. Dispositif de broyage (4) selon la revendication 1, et il est **caractérisé en ce que** ; lesdits éléments de broyage (42) sont positionnés d'une manière à être symétriques les uns par rapport aux autres.

8. Dispositif de broyage (4) selon la revendication 1, la revendication 2 et la revendication 5, et il est **caractérisé en ce que** ; il comprend des logements (43) qui fournissent l'insertion dudit élément de broyage (42) au corps (41) et une forme circulaire de broyage (46) formée via des éléments de broyage (42) insérés à l'intérieur desdits logements (43).
